# EUROPEAN PATENT APPLICATION

(11) **EP 4 832 440 A1**
(43) Date of publication of application: **28.10.2026**
(21) Application number: 23961854.9
(22) Date of filing: 20.12.2023
(51) Int. Cl.: H04L 41/16

(54) **COMMUNICATION METHOD, TERMINAL, NETWORK DEVICE, SYSTEM AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: Dehns Germany Partnerschaft mbB
(86) International application number: PCT/CN2023/140411
(87) International publication number: WO 2025/129515

(57) **Abstract**

The present disclosure relates to a communication method, a terminal, a network device, a system and a storage medium. The method comprises: sending first information to a network device, wherein the first information is used for indicating an AI function supported by a terminal, the AI function is associated with the value of a parameter in a first parameter set, the first parameter set at least comprises one or more configuration parameters, and value ranges of at least one configuration parameter in the first parameter set that correspond to different AI functions partially overlap with each other. Therefore, a mapping relationship between AI functions and parameter set values is configured, and corresponding AI functions are determined by means of configuring a parameter set having different values, thereby realizing life cycle management of the AI functions on the basis of the parameter set.

## Description

### TECHNICAL FIELD

The present disclosure relates to the field of communication technologies, and in particular, to a communication method, a terminal, a network device, a system, and a storage medium.

### BACKGROUND

Artificial intelligence technologies have continuously achieved breakthroughs in multiple fields, AI (Artificial Intelligence) technologies are also accelerating cross-penetration with other disciplinary fields, and development thereof integrates knowledge of different disciplines, and also provides new directions and methods for development of different disciplines.

In the related art, a research project regarding artificial intelligence technologies in wireless air interface communication has been established, and the project aims to study how to introduce AI technologies into wireless air interface communication, and meanwhile discuss assistance and improvement of AI technologies to wireless air interface transmission technologies.

### SUMMARY

To overcome the technical problem in the related art that lifecycle management information of an AI-functionality is unclear, the present disclosure provides a communication method, a terminal, a network device, a system, and a storage medium.

Embodiments of the present disclosure propose a communication method, a terminal, a network device, a system, and a storage medium.

According to a first aspect of embodiments of the present disclosure, a communication method is proposed, performed by a terminal, the method includes:
sending first information to a network device, where the first information is configured to indicate an AI functionality supported by the terminal, the AI functionality is associated with a parameter value in a first parameter set, the first parameter set at least includes one or more configuration parameters, and value ranges of at least one configuration parameter in the first parameter set corresponding to different AI functionalities partially overlap.

According to a second aspect of embodiments of the present disclosure, a communication method is proposed, performed by a network device, the method includes:
receiving first information sent by a terminal, where the first information is configured to indicate an AI functionality supported by the terminal, the AI functionality is associated with a parameter value in a first parameter set, the first parameter set at least includes one or more configuration parameters, and value ranges of at least one configuration parameter in the first parameter set corresponding to different AI functionalities partially overlap.

According to a third aspect of embodiments of the present disclosure, a terminal is proposed, including:
a transceiver module, configured to send first information to a network device, where the first information is configured to indicate an AI functionality supported by the terminal, the AI functionality is associated with a parameter value in a first parameter set, the first parameter set at least includes one or more configuration parameters, and value ranges of at least one configuration parameter in the first parameter set corresponding to different AI functionalities partially overlap.

According to a fourth aspect of embodiments of the present disclosure, a network device is proposed, including:
a transceiver module, configured to receive first information sent by a terminal, where the first information is configured to indicate an AI functionality supported by the terminal, the AI functionality is associated with a parameter value in a first parameter set, the first parameter set at least includes one or more configuration parameters, and value ranges of at least one configuration parameter in the first parameter set corresponding to different AI functionalities partially overlap.

According to a fifth aspect of embodiments of the present disclosure, a terminal is proposed, including:
one or more processors;
a memory coupled to the one or more processors, where the memory includes executable instructions, and when the executable instructions are executed by the one or more processors, the terminal is caused to perform the communication method according to any one of the first aspect of the present disclosure.

According to a sixth aspect of embodiments of the present disclosure, a network device is proposed, including:
one or more processors;
a memory coupled to the one or more processors, where the memory includes executable instructions, and when the executable instructions are executed by the one or more processors, the first device is caused to perform the communication method according to any one of the second aspect of the present disclosure.

According to a seventh aspect of embodiments of the present disclosure, a communication system is proposed, including a terminal and a network device, where the terminal is configured to implement the communication method according to any one of the first aspect of the present disclosure, and the network device is configured to implement the communication method according to any one of the second aspect of the present disclosure.

According to an eighth aspect of embodiments of the present disclosure, a storage medium is proposed, where the storage medium stores instructions, where when the instructions run on a communication device, the communication device is caused to perform the communication method according to any one of the first aspect or the second aspect of the present disclosure.

Through the above manner, first information is sent to a network device, the first information is configured to indicate an AI functionality supported by a terminal, the AI functionality is associated with a parameter value in a first parameter set, the first parameter set at least includes one or more configuration parameters, and value ranges of at least one configuration parameter in the first parameter set corresponding to different AI functionalities partially overlap. Thus, a mapping relationship between the AI functionality and a parameter set value is configured, a corresponding AI functionality is determined by configuring parameter sets with different values, so as to achieve the lifecycle management of the AI functionality based on the parameter set.

### BRIEF DESCRIPTION OF THE DRAWINGS

In order to more clearly describe technical solutions in the embodiments of the present disclosure, drawings required for description of the embodiments are introduced below, and the following drawings are merely some embodiments of the present disclosure, and do not cause specific limitation to the protection scope of the present disclosure.
FIG. 1a is an architectural schematic diagram of a communication system shown according to embodiments of the present disclosure.
FIG. 1b is a schematic diagram of an AI-functionality configuration method shown according to embodiments of the present disclosure.
FIG. 1c is a schematic diagram of an AI-functionality configuration method shown according to embodiments of the present disclosure.
FIG. 2 is an interaction schematic diagram of a communication method shown according to embodiments of the present disclosure.
FIG. 3 is a flow schematic diagram of a communication method shown according to embodiments of the present disclosure.
FIG. 4 is a flow schematic diagram of a communication method shown according to embodiments of the present disclosure.
FIG. 5 is a flowchart of a communication method shown according to embodiments of the present disclosure.
FIG. 6 is a structural schematic diagram of a terminal 6100 proposed by embodiments of the present disclosure.
FIG. 7 is a structural schematic diagram of a network device 7100 proposed by embodiments of the present disclosure.
FIG. 8 is a structural schematic diagram of a communication device 8100 proposed by embodiments of the present disclosure.

### DETAILED DESCRIPTION

Embodiments of the present disclosure propose a communication method, a terminal, a network device, a system, and a storage medium.

In a first aspect, embodiments of the present disclosure propose a communication method, performed by a terminal, the method includes:
sending first information to a network device, where the first information is configured to indicate an AI functionality supported by the terminal, the AI functionality is associated with a parameter value in a first parameter set, the first parameter set at least includes one or more configuration parameters, and value ranges of at least one configuration parameter in the first parameter set corresponding to different AI functionalities partially overlap.

Through the above manner, a mapping relationship between the AI functionality and a parameter set is clarified, and by configuring the mapping relationship between a parameter set value and the AI functionality, lifecycle management may be performed on the AI functionality according to the parameter set, thereby avoiding the problem that a relationship between a configuration parameter and the AI functionality is unclear.

In combination with some embodiments of the first aspect, in some embodiments, the AI functionality is associated with an AI feature, and the AI feature includes one or more AI functionalities.

In combination with some embodiments of the first aspect, in some embodiments, the method further includes:
receiving second information sent by the network device, where the second information includes a first configuration parameter, and the first configuration parameter indicates a configuration parameter in the first parameter set and a value range of the configuration parameter; and
determining, according to the first configuration parameter, a lifecycle management action of the AI functionality;

In combination with some embodiments of the first aspect, in some embodiments, the method further includes:
receiving third information sent by the network device; and
activating, according to the third information, a first AI functionality matching a current configuration parameter.

In combination with some embodiments of the first aspect, in some embodiments, the determining, according to the first configuration parameter, the lifecycle management action of the AI functionality includes:
obtaining a mapping relationship between the AI functionality and the first parameter set;
determining, from the mapping relationship, a second AI functionality corresponding to the first configuration parameter;
determining that the first AI functionality and the second AI functionality are identical, and running the first AI functionality of the terminal; and
determining that the first AI functionality is different from the second AI functionality, and deactivating the first AI functionality of the terminal.

In combination with some embodiments of the first aspect, in some embodiments, the method further includes:
determining that the first AI functionality is different from the second AI functionality and activation signaling for the second AI functionality is not received, and processing the first configuration parameter through a non-AI processing procedure;
determining that the first AI functionality is different from the second AI functionality and the activation signaling for the second AI functionality is received, deactivating the first AI functionality, and activating the second AI functionality of the terminal.

In combination with some embodiments of the first aspect, in some embodiments, the method further includes:
determining that the second AI functionality is activated, and sending fourth information to the network device, where the fourth information is configured to indicate the network device to activate, according to the fourth information, the second AI functionality of the network device.

In combination with some embodiments of the first aspect, in some embodiments, the second AI functionality includes a plurality of AI functionalities, and the determining that the first AI functionality and the second AI functionality are identical, and running the first AI functionality of the terminal includes:
determining that the first AI functionality is any one AI functionality among the plurality of AI functionalities; and
running the first AI functionality of the terminal.

In combination with some embodiments of the first aspect, in some embodiments, the method further includes:
determining that the mapping relationship does not include any AI functionality matching the first configuration parameter; and
processing the first configuration parameter through a non-AI processing procedure.

In combination with some embodiments of the first aspect, in some embodiments, the obtaining the mapping relationship between the AI functionality and the first parameter set includes:
obtaining a configuration protocol; and
determining, according to the configuration protocol, the mapping relationship.

In the above embodiments, the first information is sent to a network device, the first information is configured to indicate an AI functionality supported by a terminal, the AI functionality has a mapping relationship with a parameter value in a first parameter set, the first parameter set at least includes one or more configuration parameters, and value ranges of at least one configuration parameter in the first parameter set corresponding to different AI functionalities in an AI feature partially overlap. Thus, the mapping relationship between the AI functionality and the parameter set value is configured, a corresponding AI functionality is determined by configuring parameter sets with different values, so as to achieve the lifecycle management of the AI functionality based on the parameter set.

In a second aspect, embodiments of the present disclosure propose a communication method, performed by a network device, the method includes:
receiving first information sent by a terminal, where the first information is configured to indicate an AI functionality supported by the terminal, the AI functionality is associated with a parameter value in a first parameter set, the first parameter set at least includes one or more configuration parameters, and value ranges of at least one configuration parameter in the first parameter set corresponding to different AI functionalities partially overlap.

In combination with some embodiments of the second aspect, in some embodiments, the AI functionality is associated with an AI feature, and the AI feature includes one or more AI functionalities.

In combination with some embodiments of the second aspect, in some embodiments, the method further includes:
generating second information according to the AI functionality, where the second information includes a first configuration parameter, the first configuration parameter is configured to indicate a configuration parameter in the first parameter set and a value range of the configuration parameter, and the first configuration parameter is further configured to indicate the terminal to determine, according to the first configuration parameter, a lifecycle management action of the AI functionality; and
sending the second information to the terminal.

In combination with some embodiments of the second aspect, in some embodiments, the generating the second information according to the AI functionality includes:
obtaining a mapping relationship between the AI functionality and the first parameter set;
determining, according to the mapping relationship, the first configuration parameter; and
generating, according to the first configuration parameter, the second information, and sending the second information to the terminal.

In combination with some embodiments of the second aspect, in some embodiments, the obtaining the mapping relationship between the AI functionality and the first parameter set includes:
obtaining a configuration protocol;
determining, according to the configuration protocol, the mapping relationship.

In combination with some embodiments of the second aspect, in some embodiments, the method further includes:
sending third information to the terminal, where the third information is configured to indicate the terminal to activate, according to the third information, a first AI functionality matching a current configuration parameter.

In combination with some embodiments of the second aspect, in some embodiments, the method further includes:
sending activation signaling to the terminal, where the activation signaling is configured to indicate the terminal to activate a second AI functionality, and the second AI functionality corresponds to the first configuration parameter.

In combination with some embodiments of the second aspect, in some embodiments, the method further includes:
receiving fourth information sent by the terminal; and
determining, according to the fourth information, that the second AI functionality of the terminal is activated, and activating the second AI functionality of the network device.

In the above embodiments, first information sent by a terminal is received, the first information is configured to indicate an AI functionality supported by the terminal, the AI functionality is associated with a parameter value in a first parameter set, the first parameter set at least includes one or more configuration parameters, and value ranges of at least one configuration parameter in the first parameter set corresponding to different AI functionalities partially overlap. Thus, a mapping relationship between a value of a parameter set and the AI functionality is configured in the network device, different AI functionalities may be corresponded to according to configuration parameters with different values, a relationship between the configuration parameter and the AI functionality is clarified, and the problem that ambiguous parameter configuration causes lifecycle management disorder of the AI functionality is avoided.

In a third aspect, embodiments of the present disclosure propose a terminal, the terminal includes:
a transceiver module, configured to send first information to a network device, where the first information is configured to indicate an AI functionality supported by the terminal, the AI functionality is associated with a parameter value in a first parameter set, the first parameter set at least includes one or more configuration parameters, and value ranges of at least one configuration parameter in the first parameter set corresponding to different AI functionalities partially overlap.

In a fourth aspect, embodiments of the present disclosure propose a network device, including:
a transceiver module, configured to receive first information sent by a terminal, where the first information is configured to indicate an AI functionality supported by the terminal, the AI functionality is associated with a parameter value in a first parameter set, the first parameter set at least includes one or more configuration parameters, and value ranges of at least one configuration parameter in the first parameter set corresponding to different AI functionalities partially overlap.

In a fifth aspect, embodiments of the present disclosure propose a terminal, including:
one or more processors;
a memory coupled to the one or more processors, where the memory includes executable instructions, and when the executable instructions are executed by the one or more processors, the terminal is caused to perform the communication method according to any one of the first aspect of the present disclosure.

In a sixth aspect, embodiments of the present disclosure propose a network device, including:
one or more processors;
a memory coupled to the one or more processors, where the memory includes executable instructions, and when the executable instructions are executed by the one or more processors, the first device is caused to perform the communication method according to any one of the second aspect of the present disclosure.

In a seventh aspect, embodiments of the present disclosure propose a communication system, including a terminal and a network device, where the terminal is configured to implement the communication method according to any one of the first aspect of the present disclosure, and the network device is configured to implement the communication method according to any one of the second aspect of the present disclosure.

In an eighth aspect, embodiments of the present disclosure propose a storage medium, where the storage medium stores instructions, and when the instructions run on a communication device, the communication device is caused to perform the communication method according to any one of the first aspect or the second aspect of the present disclosure.

Through the above manner, the first information is sent to the network device, the first information is configured to indicate the AI functionality supported by the terminal, the AI functionality is associated with the parameter value in the first parameter set, the first parameter set at least includes one or more configuration parameters, and value ranges of at least one configuration parameter in the first parameter set corresponding to different AI functionalities partially overlap. Thus, the AI functionality supported by the terminal is reported, the mapping relationship between the AI functionality and the parameter set value is configured, a corresponding AI functionality is determined by configuring parameter sets with different values, so as to achieve the lifecycle management of the AI functionality based on the parameter set.

It may be understood that the above terminal, access network device, first network element, second network element, core network device, communication system, storage medium, program product, computer program, chip or chip system are all used to perform the methods proposed in embodiments of the present disclosure. Therefore, beneficial effects that may be achieved thereby may refer to beneficial effects in corresponding methods, and details are not repeated herein.

Embodiments of the present disclosure propose the title of the invention. In some embodiments, terms such as communication method and information processing method may be mutually replaced, terms such as communication apparatus and information processing apparatus may be mutually replaced, and terms such as information processing system and communication system may be mutually replaced.

Embodiments of the present disclosure are not exhaustive, and are merely illustrative of some embodiments, and do not serve as a specific limitation to the protection scope of the present disclosure. In the case of no contradiction, each step in a certain embodiment may be implemented as an independent embodiment, and the steps may be arbitrarily combined, for example, a solution after some steps are removed in a certain embodiment may also be implemented as an independent embodiment, and an order of steps in a certain embodiment may be arbitrarily exchanged; in addition, optional implementation manners in a certain embodiment may be arbitrarily combined; furthermore, embodiments may be arbitrarily combined with each other, for example, some or all steps of different embodiments may be arbitrarily combined, and a certain embodiment may be arbitrarily combined with optional implementation manners of other embodiments.

In each embodiment of the present disclosure, if there is no special description and no logical conflict, terms and/or descriptions between embodiments have consistency and may be referred to each other, and technical features in different embodiments may be combined according to internal logical relationships thereof to form new embodiments.

Terms used in embodiments of the present disclosure are only for the purpose of describing specific embodiments, and are not intended to limit the present disclosure.

In embodiments of the present disclosure, unless otherwise stated, an element expressed in a singular form, such as "one," "a," "the," "above," "said," "aforementioned," "this," and the like, may indicate "one and only one," and may also indicate "one or more," "at least one," and the like. For example, in a case where articles such as "a," "an," and "the" in English are used in translation, a noun following the article may be understood as a singular expression form, and may also be understood as a plural expression form.

In embodiments of the present disclosure, "a plurality of" refers to two or more.

In some embodiments, terms such as "at least one of (at least one item, at least one)" "one or more," "a plurality of," "multiple," and the like may be mutually replaced.

In some embodiments, recordation manners such as "at least one of A and B," "A and/or B," "A in one case, B in another case," "in response to one case A, in response to another case B," and the like may include the following technical solutions according to circumstances: in some embodiments, A (A is performed independently of B); in some embodiments, B (B is performed independently of A); in some embodiments, execution is selected from A and B (A and B are selectively performed); in some embodiments, A and B (both A and B are performed). When there are more branches such as A, B, C, and the like, the above is similarly applicable.

In some embodiments, recordation manners such as "A or B" and the like may include the following technical solutions according to circumstances: in some embodiments, A (A is performed independently of B); in some embodiments, B (B is performed independently of A); in some embodiments, execution is selected from A and B (A and B are selectively performed). When there are more branches such as A, B, C, and the like, the above is similarly applicable.

Prefix words such as "first" and "second" in embodiments of the present disclosure are merely used to distinguish different described objects, and do not constitute limitations to positions, orders, priorities, quantities, contents, and the like of the described objects. Statements of the described objects refer to descriptions in context in the claims or embodiments, and redundant limitations should not be constituted due to use of the prefix words. For example, when the described object is a "field," ordinal words before "field" in "first field" and "second field" do not limit positions or orders between the "fields," and "first" and "second" do not limit whether the "fields" modified thereby are in a same message, and also do not limit a sequence of the "first field" and the "second field." For another example, when the described object is a "level," ordinal words before "level" in "first level" and "second level" do not limit priorities between the "levels." For another example, a quantity of the described object is not limited by an ordinal word, and may be one or more. Taking a "first apparatus" as an example, a quantity of the "apparatus" may be one or more. In addition, objects modified by different prefix words may be the same or different. For example, when the described object is an "apparatus," the "first apparatus" and the "second apparatus" may be the same apparatus or different apparatuses, and types thereof may be the same or different; for another example, when the described object is "information," the "first information" and the "second information" may be the same information or different information, and contents thereof may be the same or different.

In some embodiments, "including A," "containing A," "configured to indicate A," and "carrying A" may be interpreted as directly carrying A, and may also be interpreted as indirectly indicating A.

In some embodiments, terms such as "in response to ...," "in response to determining ...," "in a case of ...," "when ...," "upon ...," "if ...," "in the event that ...," and the like may be mutually replaced.

In some embodiments, terms such as "greater than," "greater than or equal to," "not less than," "more than," "more than or equal to," "no less than," "higher than," "higher than or equal to," "not lower than," "above," and the like may be mutually replaced, and terms such as "less than," "less than or equal to," "not greater than," "fewer than," "fewer than or equal to," "not more than," "lower than," "lower than or equal to," "not higher than," "below," and the like may be mutually replaced.

In some embodiments, an apparatus and the like may be interpreted as physical, and may also be interpreted as virtual, and a name thereof is not limited to a name recorded in the embodiments. Terms such as "apparatus," "equipment," "device," "circuit," "network element," "node," "functionality," "unit," "section," "system," "network," "chip," "chip system," "entity," "subject," and the like may be mutually replaced.

In some embodiments, "network" may be interpreted as an apparatus included in a network (for example, an access network device, a core network device, and the like).

In some embodiments, terms such as "terminal," "terminal device," "user equipment, UE," "user terminal," "mobile station, MS," "mobile terminal, MT," subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, and the like may be mutually replaced.

In some embodiments, a terminal may be replaced with an access network device, a core network device, or a network device. In this case, a structure may also be set in which the access network device, the core network device, or the network device has all or part of functionalities possessed by the terminal.

In some embodiments, obtaining data, information, and the like may comply with laws and regulations of a country where the obtaining is performed.

In some embodiments, data, information, and the like may be obtained after user consent is obtained.

In addition, each element, each row, or each column in a table of embodiments of the present disclosure may be implemented as an independent embodiment, and any combination of elements, rows, and columns may also be implemented as an independent embodiment.

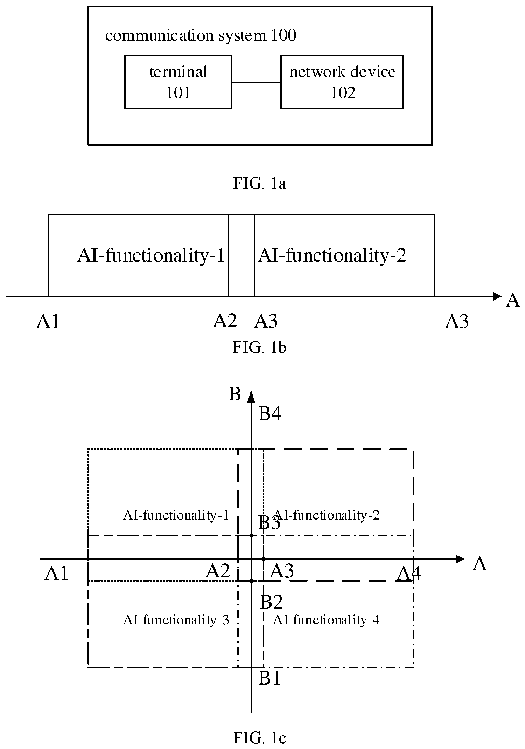

FIG. 1a is an architectural schematic diagram of a communication system shown according to embodiments of the present disclosure. As shown in FIG. 1a, a communication system 100 includes a terminal 101, an access network device 102, and a core network device 103.

In some embodiments, the terminal 101, for example, includes at least one of a mobile phone, a wearable device, an Internet of Things device, a vehicle having a communication functionality, a smart vehicle, a tablet computer (Pad), a computer having a wireless transceiver functionality, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited thereto.

In some embodiments, the access network device 102 is, for example, a node or device that accesses a terminal to a wireless network, and the access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open-type base station (Open RAN), a cloud base station (Cloud RAN), a base station in another communication system, or an access node in a Wi-Fi system, but is not limited thereto.

In some embodiments, the technical solutions of the present disclosure may be applicable to an Open RAN architecture. In this case, interfaces between access network devices or interfaces within an access network device involved in embodiments of the present disclosure may become internal interfaces of Open RAN, and procedures and information interaction between these internal interfaces may be implemented by software or programs.

In some embodiments, an access network device may be composed of a central unit (CU) and a distributed unit (DU), where the CU may also be referred to as a control unit, and adopting a CU-DU structure may split protocol layers of the access network device, functionalities of part of the protocol layers are placed in the CU for centralized control, functionalities of the remaining part or all protocol layers are distributed in the DU, and the DU is centrally controlled by the CU, but the present disclosure is not limited thereto.

In some embodiments, the core network device 103 may be one device, including a first network element 1031, a second network element 1032, and the like, and may also be a plurality of devices or a device group, respectively including all or part of the first network element 1031, the second network element 1032, and the like. A network element may be virtual, or may be physical. A core network, for example, includes at least one of an Evolved Packet Core (EPC), a 5G Core Network (5GCN), or a Next Generation Core (NGC).

It may be understood that the communication system described in embodiments of the present disclosure is for more clearly describing the technical solutions of embodiments of the present disclosure, and does not constitute a limitation to the technical solutions proposed in embodiments of the present disclosure. A person of ordinary skill in the art may know that, with evolution of a system architecture and emergence of new service scenarios, the technical solutions proposed in embodiments of the present disclosure are also applicable to similar technical problems.

The following embodiments of the present disclosure may be applied to the communication system 100 shown in FIG. 1a, or some subjects, but are not limited thereto. Each subject shown in FIG. 1a is illustrative, the communication system may include all or some subjects in FIG. 1a, and may also include other subjects other than FIG. 1a, a quantity and form of each subject are arbitrary, each subject may be physical or may be virtual, a connection relationship between the subjects is illustrative, the subjects may be not connected or may be connected, and the connection may be in any manner, may be a direct connection or may be an indirect connection, and may be a wired connection or may be a wireless connection.

Each embodiment of the present disclosure may be applied to Long Term Evolution (LTE), LTE-Advanced (LTE-A), LTE-Beyond (LTE-B), SUPER 3G, IMT-Advanced, a fourth generation mobile communication system (4th generation mobile communication system, 4G), ), a fifth generation mobile communication system (5th generation mobile communication system, 5G), 5G new radio (new radio, NR), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a Public Land Mobile Network (PLMN) network, a Device-to-Device (D2D) system, a Machine to Machine (M2M) system, an Internet of Things (IoT) system, Vehicle-to-Everything (V2X), a system using another communication method, a next-generation system extended based on them, and the like. In addition, a combination of a plurality of systems may also be applied (for example, a combination of LTE or LTE-A and 5G, and the like).

In some embodiments, wide application of new radio communication technologies brings great changes to all aspects of people's lives. According to an application vision provided by ITU (Telecommunication Union), new radio communication technologies will penetrate into various fields of a future society, and construct a comprehensive information ecosystem centered on users. The communication experience rate of a user may reach 100 Mbit/s to 1 Gbit/s, and may support multiple service experiences such as mobile virtual reality; a communication peak rate may reach 10 Gbit/s to 20 Gbit/s, traffic density may reach 10 Mbit/s/m², and growth of more than one thousand times of mobile service traffic may be supported; communication connection density may reach 1 million/m², and massive Internet of Things devices may be effectively supported; communication transmission latency may reach a millisecond level, and may satisfy strict requirements of Vehicle-to-Everything and industrial control; new radio communication may support communication transmission at a moving speed of 500 km/h, and may satisfy a good user communication experience in a rapidly moving environment such as a high-speed railway. Therefore, the new radio communication technologies may serve as a representative of new infrastructure to construct a new information society.

In some embodiments, AI (Artificial Intelligence) technologies have continuously achieved breakthroughs in multiple fields. Continuous development in fields such as intelligent speech and computer vision not only brings rich and colorful various applications to intelligent terminals, and also has wide applications in multiple fields such as education, transportation, home, medical care, retail, and security, bringing convenience to people's lives while also promoting industrial upgrading in various industries. AI technologies are also accelerating cross-penetration with other disciplinary fields, and development thereof integrates knowledge of different disciplines while also providing new directions and methods for development of different disciplines. Exemplarily, in order to cope with complex and variable communication processes in new radio communication technologies, AI technologies are introduced to assist wireless air interface transmission technologies, thereby improving communication transmission efficiency. For example, in research of wireless AI, application cases of AI include: AI-based CSI (Channel State Information) enhancement, AI-based beam management, AI-based terminal positioning, and the like.

In some embodiments, two manners for lifecycle management of an AI model in a communication process are defined, one of which is a lifecycle management manner based on AI-functionality, including activation, deactivation, switching of the AI-functionality, or falling back to a non-AI processing manner, and the like; and the other one is that a plurality of AI-functionalities may be included in one AI/ML (Machine Learning)-feature (feature), one AI-functionality corresponds to a series of parameter configuration items, and different AI-functionalities may be corresponded to according to different parameter values. However, in related art, how to construct an AI-functionality according to different parameter values is not clearly determined, and since the lifecycle management of the AI-functionality may be performed according to the configuration parameters of the AI-functionality, a relationship between the configuration parameters and the lifecycle management of the AI-functionality is also unclear, resulting in disorder of a configuration-parameter-based AI-functionality determination manner and the AI-functionality lifecycle management.

In some embodiments, one or more AI-features may be included in both a terminal and a network device, different AI-features correspond to different AI assistance in a communication process, one or more AI-functionalities may be included under each AI-feature, and the AI-functionality may be determined according to values of one or more configuration parameters. The value ranges of configuration parameters corresponding to different AI-functionalities may partially overlap. For example, when a value range of configuration parameter A is [1, 4], the value range corresponds to AI-functionality-1 in an AI-feature, and when the value range of configuration parameter A is [2, 5], the value range corresponds to AI-functionality-2 in the AI-feature, where in the same AI-feature, values of configuration parameter A corresponding to AI-functionality-1 and AI-functionality-2 partially overlap between [2, 4]. Thus, when indicating that a value of configuration parameter A in the first parameter set is 3, the AI-functionality corresponding to the first parameter set includes AI-functionality-1 and AI-functionality-2.

FIG. 1b is a schematic diagram of an AI-functionality configuration method shown according to embodiments of the present disclosure. As shown in FIG. 1b, a plurality of AI-functionalities are included under a same AI-feature corresponding to a terminal, different AI-functionalities are determined by a value range of configuration parameter A, where when the value range of configuration parameter A is [A1, A3], the value range corresponds to AI-functionality-1 in the AI-feature; when a value range of the configuration parameter is [A2, A4], the value range corresponds to AI-functionality-2 in the AI-feature. Thus, the value ranges of configuration parameter A corresponding to AI-functionality-1 and AI-functionality-2 overlap within the range of [A2, A3], that is, when a value of configuration parameter A of the same AI-feature is [A2, A3], the configuration parameter A both corresponds to AI-functionality-1 and AI-functionality-2.

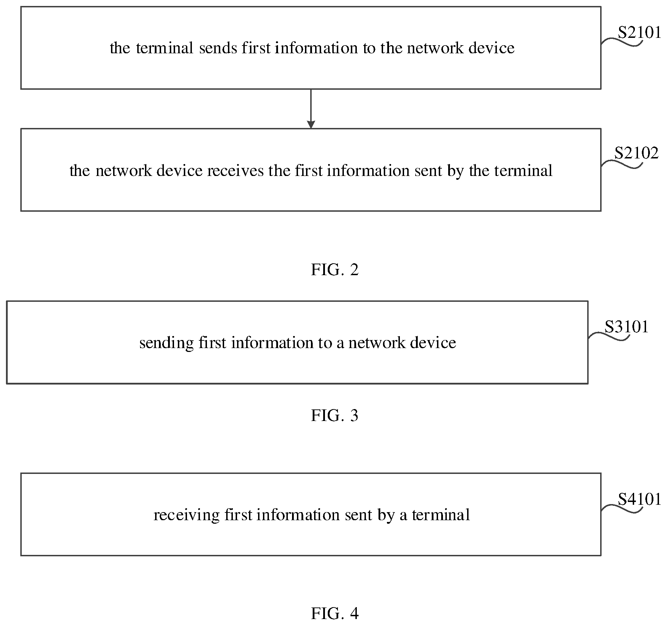

FIG. 1c is a schematic diagram of an AI-functionality configuration method shown according to embodiments of the present disclosure. As shown in FIG. 1c, a same AI-feature corresponding to a terminal may include a plurality of AI-functionalities, and the plurality of AI-functionalities are respectively: AI-functionality-1, AI-functionality-2, AI-functionality-3, and AI-functionality-4. The plurality of AI-functionalities are jointly determined according to value ranges of configuration parameter A and configuration parameter B, and different value ranges of configuration parameter A and configuration parameter B correspond to different AI-functionalities. Exemplarily, as shown in FIG. 2b, under the AI-feature, when a value range of configuration parameter A is [A1, A3] and a value range of configuration parameter B is [B2, B4], the value ranges correspond to AI-functionality-1; when the value range of configuration parameter A is [A2, A4] and the value range of configuration parameter B is [B2, B4], the value ranges correspond to AI-functionality-2; at this time, when the value range of configuration parameter A is [A2, A3] and the value range of configuration parameter B is [B2, B3], the value ranges may correspond to AI-functionality-1 and AI-functionality-2 under the AI-feature, that is, values of configuration parameters corresponding to AI-functionality-1 and AI-functionality-1 partially overlap, and the overlapping part is the configuration parameter A [A2, A3] and the configuration parameter B [B2, B3].

In some embodiments, in the above embodiments, the AI-functionality is determined by configuration parameter A and/or configuration parameter B, but a quantity of types corresponding to configuration parameters is not limited in this embodiment. The AI-functionality may be allocated by a value range of a one-dimensional configuration parameter, for example, the AI-functionality is determined by a value of configuration parameter A or configuration parameter B; and the AI-functionality may also be allocated by value ranges of multi-dimensional configuration parameters, for example, the AI-functionality is determined by value ranges of configuration parameter A, configuration parameter B, ..., configuration parameter N, and the like. The value ranges of the respective configuration parameters jointly constitute a value range corresponding to the AI-functionality, and configuration-parameter value ranges of different AI-functionalities under a same AI-feature may partially overlap.

Exemplarily, taking AI-based CSI compression as an example, an AI/ML feature is configured in both a terminal and a network device, and is used to enable the terminal and the network device to compress, by means of AI, CSI measured on a terminal side, and use, on a network device side, an AI-based manner to decompress CSI information uploaded by the terminal, thereby obtaining CSI information reported by the terminal. For the AI/ML feature configured in the terminal and the network device, four AI-functionalities are configured under the AI/ML feature, and the AI-functionalities are all determined by value ranges of a frequency-domain configuration parameter CSI-RS frequency of CSI and an antenna configuration parameter CSI-RS port of the terminal. According to the AI-functionality, a value range of the CSI-RS frequency configuration parameter, and a value range of the CSI-RS port configuration parameter, the following mapping table is configured:

| | CSI-RS frequency | CSI-RS port |
|---|---|---|
| AI-functionality-1 | {16 RBs, 32 RBs, 48 RBs} | {16 ports, 32 ports, 64 ports} |
| AI-functionality-2 | {16 RBs, 32 RBs, 48 RBs} | {64 ports, 128 ports, 256 ports} |
| AI-functionality-3 | {48 RBs, 96 RBs, 128 RBs} | {16 ports, 32 ports, 64 ports} |
| AI-functionality-4 | {48 RBs, 96 RBs, 128 RBs} | {64 ports, 128 ports, 256 ports} |

According to the above mapping table, it is determined that AI-functionality-1 and AI-functionality-2 overlap in the part of configuration parameters: CSI-RS frequency {16 RBs, 32 RBs, 48 RBs} and CSI-RS port {64 ports}; AI-functionality-2 and AI-functionality-3 overlap in the part of configuration parameters: CSI-RS frequency {48 RBs} and CSI-RS port {64 ports}; AI-functionality-3 and AI-functionality-4 overlap in the part of configuration parameters: CSI-RS frequency {48 RBs, 96 RBs, 128 RBs} and CSI-RS port {64 ports}. The frequency-domain configuration parameters and antenna configuration parameters corresponding to the four AI-functionalities all partially overlap.

In some embodiments, the network device sends parameter configuration information to the terminal, and the parameter configuration information is used to indicate, to the terminal, a configuration parameter and a value range of the configuration parameter. Exemplarily, in this embodiment, the configuration parameter is different from a lifecycle management message of the AI-functionality in the terminal, where the lifecycle management message is used to indicate operations such as activation, deactivation, or switching of the AI-functionality supported in the terminal.

In some embodiments, the configuration parameter sent by the network device is used to indicate a value range of the configuration parameter, and the configuration parameter is associated with the AI-functionality supported by the terminal. In this embodiment, the parameter configuration information and/or the parameter reconfiguration information of the configuration parameter does not cause a lifecycle management action of the AI-functionality in the terminal, that is, the configuration parameter does not bring activation, deactivation, and switching actions of the AI-functionality in the terminal.

In some embodiments, a configuration parameter sent by the network device is used to indicate a value range of the configuration parameter, and the terminal may determine, according to the value range with reference to the mapping relationship in the above mapping table, an AI-functionality associated with the configuration parameter. When the network device needs to activate the AI-functionality in the terminal, the network device needs to re-send activation signaling of the AI-functionality to the terminal, and the terminal activates the corresponding AI-functionality based on the activation signaling.

In some embodiments, before receiving the configuration parameter sent by the network device, the AI-functionality-1 under the same AI-feature is activated in the terminal. After the terminal receives the configuration parameter, when it is determined, according to the above mapping table, that the configuration parameter corresponds to one AI-functionality, and the AI-functionality is AI-functionality-1, the terminal continues to run current AI-functionality-1; when it is determined, according to the above mapping table, that the AI-functionality corresponding to the configuration parameter is AI-functionality-2, and the terminal receives the activation signaling for activating AI-functionality-2 corresponding to the configuration parameter, the terminal performs switching of the AI-functionality, and switches the AI-functionality currently running in the terminal from AI-functionality-1 to AI-functionality-2.

In some embodiments, when it is determined, according to the above mapping table, that AI-functionality-2 corresponding to the configuration parameter is different from AI-functionality-1 currently running in the terminal, and the terminal does not receive activation signaling of AI-functionality-2, the terminal falls back to a non-AI-based processing manner to process the configuration parameter.

In some embodiments, when it is determined, according to the above mapping table, that the value range of the configuration parameter is different from value ranges of configuration parameters corresponding to respective AI-functionalities in the above mapping table, the terminal falls back to a non-AI-based processing manner to process the configuration parameter.

In some embodiments, the network device may perform the lifecycle management on an AI functionality supported in the terminal according to a configuration parameter. Exemplarily, when it is determined, according to the above mapping table, that the configuration parameter corresponds to only one AI-functionality, if the terminal currently does not activate another AI-functionality under the same AI-feature, the AI-functionality corresponding to the configuration parameter is activated; if the terminal currently activates AI-functionality-1 under the same AI-feature, and the AI-functionality-1 is different from AI-functionality-2 corresponding to the configuration parameter, the currently activated AI-functionality-1 is deactivated, and AI-functionality-2 is activated.

In some embodiments, when it is determined, according to the above mapping relationship, that the configuration parameter corresponds to a plurality of AI-functionalities, the terminal needs to determine a currently running AI-functionality based on lifecycle management information of the AI functionality. Exemplarily, when the plurality of AI- functionalit include AI-functionality-1 under the same AI-feature currently running in the terminal, the terminal runs AI-functionality-1 based on the configuration parameter. When the plurality of AI- functionalit do not include AI-functionality-1 under the same AI-feature currently running in the terminal, the network device may indicate AI-functionalit- 2 from the plurality of AI- functionalit through the lifecycle management information, and the terminal switches, according to the lifecycle management information, the currently running AI- functionalit from AI-functionalit- 1 to AI-functionalit- 2.

In some embodiments, taking, after AI-based CSI compression is activated, the network device performing the lifecycle management on an AI-functionality corresponding to CSI compression according to a configuration parameter as an example. When the network device sends configuration parameters to the terminal: CSI-RS frequency {32 RBs} and CSI-RS port {16 ports}, with reference to the above mapping table, the configuration parameters correspond to unique AI-functionalit-1, and the terminal activates the AI-functionalit- 1 according to the configuration parameters.

In some embodiments, after AI-based CSI compression of the terminal is activated, the terminal currently runs AI-functionalit- 1. When the network device sends configuration parameters to the terminal: CSI-RS frequency {48 RBs} and CSI-RS port {128 ports}, it is determined, according to the above mapping table, that the configuration parameters correspond to AI-functionalit- 2 and AI-functionalit- 4. At this time, the network device needs to send separate lifecycle management information to indicate which one of AI-functionalit- 2 and AI-functionalit- 4 is to be activated. Exemplarily, after the network device sends the configuration parameters, the network device further sends activation signaling to the terminal, and the terminal activates AI-functionalit- 4 in the terminal according to the activation signaling.

In some embodiments, after AI-based CSI compression of the terminal is activated, the terminal currently runs AI-functionalit- 1. When the network device sends configuration parameters to the terminal: CSI-RS frequency {48 RBs} and CSI-RS port {64 ports}, it is determined, with reference to the above mapping table, that the configuration parameters correspond to AI-functionalit- 1, AI-functionalit- 2, AI-functionalit- 3, and AI-functionalit- 4, which include AI-functionalit-1 currently running in the terminal, and the terminal continues to run AI-functionalit- 1 based on the configuration parameters.

Through the above manner, a mapping relationship between a parameter set and an AI functionality is configured in the terminal and the network device. After the terminal reports the supported AI functionality, the network device may send a parameter set to the terminal based on the mapping relationship, so as to perform lifecycle management on the AI functionality in the terminal. The problem that the lifecycle management of the AI functionality is disordered due to an unclear correspondence relationship between the parameter set and the AI functionality is avoided.

FIG. 2 is an interaction schematic diagram of a communication method shown according to embodiments of the present disclosure. As shown in FIG. 2, the communication method involved in embodiments of the present disclosure is performed by a network device and a terminal, and the above method includes:
Step S2101, the terminal sends first information to the network device.

In some embodiments, the first information is configured to indicate the AI functionality supported by the terminal. Exemplarily, in this embodiment, the first information sent by the terminal to the network device may include functionality name information, functionality ID information, functionality sequence number information, and the like corresponding to the AI functionality supported by the terminal, and the network device may determine, according to the first information, the AI functionality supported by the terminal. The AI functionality is configured to assist wireless communication between the network device and the terminal, so as to ensure communication parameters such as quality and rate of communication signals in a wireless communication process, and ensure stability of the wireless communication.

In some embodiments, a mapping relationship is configured in both the terminal and the network device, and the mapping relationship is a correspondence relationship between the AI functionality and parameter values in a first parameter set, and different AI functionalities correspond according to values of the first parameter set. The first parameter set includes one or more configuration parameters, each configuration parameter corresponds to different value ranges, and value ranges of one or more configuration parameters jointly constitute a value range of the first parameter set. Exemplarily, the following mapping relationship is configured in the terminal and the network device:

| | Configuration parameter A | Configuration parameter B |
|---|---|---|
| AI functionality-1 | {1,2,3} | {1,2,4} |
| AI functionality-2 | {1,2,3} | {4,5,6} |
| AI functionality-3 | {3,4,5} | {1,2,3} |
| AI functionality-4 | {3,4,5} | {4,5,6} |

As shown in the above mapping relationship, the first parameter set corresponding to each AI functionality includes configuration parameter A and a configuration parameter, and a value of configuration parameter A and a value of configuration parameter B jointly constitute a value range of the first parameter set. Through the above mapping relationship, it may be determined that there is partial overlap in value ranges of the first parameter set corresponding to AI functionality-1, AI functionality-2, AI functionality-3, and AI functionality-4. For example, AI functionality-1 and AI functionality-2 overlap when configuration parameter A is {1,2,3} and configuration parameter B is {4}, that is, when the configuration parameters are A{1,2,3}B{4}, AI functionality-1 and AI functionality-2 may correspond with reference to the above mapping relationship. At this time, the configuration parameters and the AI functionality are not in a unique correspondence relationship. Therefore, another configuration parameter is required to indicate the terminal, so as to implement the lifecycle management of the AI functionality in the terminal. The configuration parameter types corresponding to the first parameter set may include a plurality of types, and a value range of the first parameter set may be jointly constituted based on value ranges of the plurality of configuration parameter types.

In some embodiments, the first information includes a first parameter set, the first parameter set includes one or more configuration parameters and a value range of each configuration parameter, and the value range of the first parameter set is jointly constituted according to value ranges of one or more configuration parameters. The first parameter set is configured to indicate the network device to determine, according to the mapping relationship between the AI functionality and the first parameter set, an AI functionality matching the first parameter set, and the AI functionality is an AI functionality supported by the terminal.

Optionally, in some embodiments, the AI functionality is associated with an AI feature, and the AI feature includes one or more AI functionalities.

Exemplarily, at least one AI feature is configured in the terminal, one or more AI functionalities are included under each AI feature, and the one or more AI functionalities are all configured to implement the corresponding AI feature. Therefore, in the terminal, only one AI functionality may run under the same AI feature at the same time. The AI functionality associated with the first parameter set under the current AI feature may be determined according to the above first parameter set.

Step S2102, the network device receives the first information sent by the terminal.

In some embodiments, the first information is configured to indicate an AI functionality supported by the terminal. Exemplarily, a plurality of models are configured in the network device, different models correspond to different AI functionalities, and the network device may determine, according to the first information reported by the terminal, the AI functionality supported by the terminal, and perform lifecycle management on the AI functionality in the terminal based on the AI functionality supported by the terminal, where the lifecycle management action may include activation, deactivation, switching, and the like of the AI functionality in the terminal.

In some embodiments, a mapping relationship is configured in both the terminal and the network device, and the mapping relationship is a correspondence relationship between the AI functionality and parameter values in a first parameter set, and different AI functionalities correspond according to values of the first parameter set. The effect of the mapping relationship is the same as that in the above embodiments, reference may be made to the above embodiments, and details are not repeated herein.

Optionally, in some embodiments, the AI functionality is associated with an AI feature, and the AI feature includes one or more AI functionalities.

Exemplarily, at least one AI feature is likewise configured in the network device, each AI feature includes one or more AI functionalities, and the one or more AI functionalities are all configured to implement the corresponding AI feature. Therefore, in the terminal, only one AI functionality may run under the same AI feature at the same time. The AI functionality associated with the first parameter set under the current AI feature may be determined according to the above first parameter set.

Optionally, in some embodiments, the method further includes:
the network device generates second information according to the AI functionality, where the second information includes a first configuration parameter, the first configuration parameter is configured to configure a parameter value in the first parameter set, and the first configuration parameter is configured to indicate the terminal to determine, according to the first configuration parameter, a lifecycle management action of the AI functionality;
the network device sends the second information to the terminal.

Exemplarily, after the network device determines the AI functionality supported by the terminal according to the first information, the network device determines, according to the mapping relationship, the first parameter set corresponding to the AI functionality supported by the terminal, and the first parameter set may include one or more configuration parameters and value ranges of the one or more configuration parameters. After the network device determines, according to communication requirements of a current network communication environment, the AI functionality that needs to be scheduled in a current communication process, the network device determines, based on the mapping relationship, the first configuration parameter corresponding to the AI functionality that needs to be scheduled, where the first configuration parameter includes values of one or more configuration parameters. The AI functionality that needs to be scheduled may be an AI functionality supported by the terminal, and may also not be an AI functionality supported by the terminal. The second information is generated according to the first configuration parameter, and the second information is sent to the terminal.

In some embodiments, the second information is configured to configure the first configuration parameter for the terminal, the first configuration parameter is configured to configure a parameter value in the first parameter set, and the parameter value range may be within a value range of a corresponding configuration parameter in the first parameter set. Exemplarily, the parameter value range may also not be within the value range of the corresponding configuration parameter in the first parameter set.

Optionally, in some embodiments, the above step of generating second information according to the AI functionality includes:
the network device obtains a mapping relationship between the AI functionality and the first parameter set;
the network device determines the first configuration parameter according to the mapping relationship; and
the network device generates the second information according to the first configuration parameter and sends the second information to the terminal.

Exemplarily, in this embodiment, after the network device determines the AI functionality supported by the terminal according to the first information, the network device obtains a mapping relationship between the AI functionality and the first parameter set, so as to determine the first parameter set corresponding to the AI functionality supported by the terminal, where the first parameter set includes one or more configuration parameters and a value range of each configuration parameter. The network device selects, based on the first parameter set in the mapping relationship, and network requirements and network configuration of a current network environment, a configuration parameter and a value of the configuration parameter from the first parameter set as the first configuration parameter, and then generates second information according to the first configuration parameter and sends the second information to the terminal. Thus, the lifecycle management is performed on the AI functionality of the terminal according to the first configuration parameter.

Optionally, in some embodiments, the above step of obtaining the mapping relationship between the AI functionality and the first parameter set includes:
the network device obtains a configuration protocol;
the network device determines the mapping relationship according to the configuration protocol.

Exemplarily, in this embodiment, the network device determines, according to the configuration protocol, the mapping relationship between the first parameter set and the AI functionality in the terminal. The configuration protocol may be configured in the terminal in advance, and when the first configuration parameter sent by the network device is received, the mapping relationship between the first parameter set and the AI functionality is determined by calling the configuration protocol.

Optionally, in some embodiments, the method further includes:
the network device sends third information to the terminal, where the third information is configured to indicate the terminal to activate, according to the third information, a first AI functionality matching a current configuration parameter.

Exemplarily, the network device sends third information to the terminal, where the third information is activation information of the first AI functionality, and the terminal is indicated, through the third information, to activate the first AI functionality matching the current configuration parameter. The current configuration parameter may be a parameter corresponding to the AI functionality configured by the network device for the terminal before sending the third information, and the terminal determines the first AI functionality based on the current configuration parameter, and then activates the AI functionality based on the third information.

In some embodiments, the current configuration parameter may also be a configuration parameter associated with the AI functionality supported by the terminal, and the terminal may determine, from the mapping relationship, the first AI functionality matching the current configuration parameter. Thus, the current configuration parameter and the first AI functionality are in a unique correspondence relationship in the mapping relationship, and after the first AI functionality is determined according to the current configuration parameter, the first AI functionality in the terminal is activated based on the third information.

Optionally, in some embodiments, the method further includes:
the terminal receives second information sent by the network device, where the second information includes a first configuration parameter, and the first configuration parameter is configured to indicate a configuration parameter in the first parameter set and a value range of the configuration parameter;
the terminal determines, according to the first configuration parameter, a lifecycle management action of the AI functionality.

Exemplarily, the terminal receives second information sent by the network device, where the second information includes the first configuration parameter. In this embodiment, the definition of the second information is consistent with that in the above embodiments, reference may be made to the above embodiments, and details are not repeated herein. After the terminal receives the second information sent by the network device, the terminal performs lifecycle management on the AI functionality supported by the terminal according to the first configuration parameter in the second information. The lifecycle management action includes activation, deactivation, switching, and the like of the AI functionality.

Optionally, in some embodiments, the method further includes:
the terminal receives third information sent by the network device;
the terminal activates, according to the third information, a first AI functionality matching a current configuration parameter.

Exemplarily, in this embodiment, the effect of the third information is the same as that in the above embodiments, reference may be made to the above embodiments, and details are not repeated herein.

Optionally, in some embodiments, the above step of determining, according to the first configuration parameter, the lifecycle management action of the AI functionality includes:
the terminal obtains a mapping relationship between the AI functionality and the first parameter set;
the terminal determines, from the mapping relationship, a second AI functionality corresponding to the first configuration parameter;
the terminal determines that the first AI functionality and the second AI functionality are identical, and runs the first AI functionality of the terminal;
the terminal determines that the first AI functionality is different from the second AI functionality, and deactivates the first AI functionality of the terminal.

Exemplarily, a mapping relationship between the AI functionality and the first parameter set is configured in both the terminal and the network device, and a definition of the mapping relationship is the same as that in the above embodiments, reference may be made to the above embodiments, and details are not repeated herein. After the terminal receives the first configuration parameter sent by the network device, the terminal determines, according to the mapping relationship, a second AI functionality matching the first configuration parameter. Based on the above mapping relationship, the second AI functionality may include one AI functionality or a plurality of AI functionalities. When the determined second AI functionality is the same as the first AI functionality currently activated and running in the terminal, the first AI functionality of the terminal continues to run; when the determined second AI functionality is different from the first AI functionality currently activated and running in the terminal, the currently running first AI functionality is deactivated, and lifecycle management is performed on other AI functionalities in the terminal based on the first configuration parameter.

Optionally, in some embodiments, the above step of obtaining the mapping relationship between the AI functionality and the first parameter set includes:
the terminal obtains a configuration protocol;
the terminal determines the mapping relationship according to the configuration protocol.

Exemplarily, in this embodiment, the mapping relationship between the first parameter set and the AI functionality in the terminal is determined according to the configuration protocol. The configuration protocol may be configured in the terminal in advance, and when the first configuration parameter sent by the network device is received, the mapping relationship between the first parameter set and the AI functionality is determined by calling the configuration protocol.

Optionally, in some embodiments, the method further includes:
the terminal determines that the first AI functionality is different from the second AI functionality and activation signaling for the second AI functionality is not received, and processes the first configuration parameter through a non-AI processing procedure;
the terminal determines that the first AI functionality is different from the second AI functionality and activation signaling for the second AI functionality is received, deactivates the first AI functionality, and activates the second AI functionality of the terminal.

Exemplarily, in this embodiment, when the first AI functionality is different from the second AI functionality, the network device needs to reconfigure the activation signaling to the terminal as lifecycle management information, so as to perform lifecycle management on the AI functionality in the terminal. After the terminal determines, according to the mapping relationship, the second AI functionality corresponding to the first configuration parameter, the terminal compares the second AI functionality with the first AI functionality currently running in the terminal. When the first AI functionality is different from the second AI functionality, and the terminal does not receive, within a set time, activation signaling sent by the network device and used to activate the second AI functionality, the first configuration parameter is processed through a non-AI processing procedure; when the first AI functionality is different from the second AI functionality, and the terminal receives activation signaling for the second AI functionality, switching of the AI functionality is implemented in the terminal, the currently running first AI functionality is deactivated, and the second AI functionality in the terminal is activated.

Optionally, in some embodiments, the second AI functionality includes a plurality of AI functionalities, and the above step of determining that the first AI functionality and the AI functionality are identical, and running the first AI functionality of the terminal includes:
the terminal determines that the first AI functionality is any one AI functionality among the plurality of AI functionalities;
the terminal runs the first AI functionality.

Exemplarily, in this embodiment, when it is determined, based on the above mapping relationship, that the second AI functionality corresponding to the first configuration parameter is a plurality of AI functionalities, the first AI functionality is compared with the plurality of AI functionalities in the second AI functionality, and when the plurality of AI functionalities includes the first AI functionality, the first AI functionality is run based on the first configuration parameter.

Optionally, in some embodiments, the method further includes:
the terminal determines that the mapping relationship does not include any AI functionality matching the first configuration parameter;
the terminal processes the first configuration parameter through a non-AI processing procedure.

Exemplarily, after the terminal receives the first configuration parameter, the terminal corresponds the first configuration parameter to the mapping relationship, and if the mapping relationship does not include any AI functionality matching the first configuration parameter, the first configuration parameter is processed through a non-AI processing procedure. The cases where the first configuration parameter does not match the mapping relationship include that the first configuration parameter includes a configuration parameter type in which the mapping relationship does not include the first configuration parameter; and a value range of a configuration parameter in the mapping relationship is different from a value range corresponding to the first configuration parameter.

Optionally, in some embodiments, the method further includes:
the terminal determines that the second AI functionality is activated, and sends fourth information to the network device.

In some embodiments, the fourth information is configured to indicate the network device to activate, according to the fourth information, the second AI functionality of the network device. Exemplarily, after the terminal activates the second AI functionality based on the first configuration parameter, the terminal feeds back the fourth information to the network device, such that the network device determines that the second AI functionality in the terminal is activated, and activates the second AI functionality in the network device according to the fourth information. Thus, the terminal and the network device may perform wireless communication based on the second AI functionality.

Optionally, in some embodiments, the method further includes:
the network device receives fourth information sent by the terminal;
the network device determines, according to the fourth information, that the second AI functionality of the terminal is activated, and activates the second AI functionality of the network device.

Exemplarily, in this embodiment, the definition of the fourth information is the same as that in the above embodiments, reference may be made to the above embodiments, and details are not repeated herein.

Through the above manner, the first information is sent to the network device, the first information is configured to indicate the AI functionality supported by the terminal, the AI functionality is associated with the parameter value in the first parameter set, the first parameter set at least includes one or more configuration parameters, and the value ranges of at least one configuration parameter in the first parameter set corresponding to different AI functionalities in the AI feature partially overlap. Thus, a mapping relationship between the AI functionality and a parameter set value is configured, a corresponding AI functionality is determined by configuring parameter sets with different values, so as to achieve the lifecycle management of the AI functionality based on the parameter set.

In some embodiments, names of information and the like are not limited to the names recorded in the embodiments, and terms such as "information," "message," "signal," "signaling," "report," "configuration," "indication," "instruction," "command," "channel," "parameter," "domain," "field," "symbol," "symbol," "codebook," "codeword," "codepoint," "bit," "data," "program," "chip," and the like may be mutually replaced.

In some embodiments, terms such as "radio," "wireless," "radio access network, RAN," "access network, AN," "RAN-based," and the like may be mutually replaced.

In some embodiments, terms such as "synchronization signal, SS," "synchronization signal block, SSB," "reference signal, RS," "pilot," "pilot signal," and the like may be mutually replaced.

In some embodiments, terms such as wireless access scheme, waveform, and the like may be mutually replaced.

In some embodiments, "acquire," "obtain," "get," "receive," "transmit," "bidirectional transmission," and "send and/or receive" may be mutually replaced, which may be interpreted as various meanings such as receiving from another subject, obtaining from a protocol, obtaining from a higher layer, obtaining by self-processing, autonomously implementing, and the like.

In some embodiments, terms such as "send," "transmit," "report," "deliver," "transmit," "bidirectional transmission," "send and/or receive," and the like may be mutually replaced.

In some embodiments, terms such as "certain," "preseted," "predetermined," "set," "indicated," "a certain," "any," "first," and the like may be mutually replaced, and "certain A," "predetermined A," "preset A," "set A," "indicated A," "a certain A," "any A," "first A" may be interpreted as A pre-specified in a protocol or the like, may also be interpreted as A obtained through setting, configuration, indication, or the like, and may also be interpreted as certain A, a certain A, any A, first A, or the like, but is not limited thereto.

In some embodiments, determination or judgment may be performed through a value represented by 1 bit (0 or 1), may also be performed through a truth value represented by true or false (a boolean value), and may also be performed through comparison of numerical values (for example, comparison with a predetermined value), but is not limited thereto.

In some embodiments, "not expect to receive" may be interpreted as not receiving on a time-domain resource and/or a frequency-domain resource, and may also be interpreted as, after data or the like is received, not performing subsequent processing on the data or the like; "not expect to send" may be interpreted as not sending, and may also be interpreted as sending but not expecting a receiving party to respond to the sent content.

In some embodiments, reference may be made to other optional implementation manners recorded before or after the description corresponding to FIG. 2.

FIG. 3 is a flow schematic diagram of a communication method shown according to embodiments of the present disclosure. As shown in FIG. 3, the communication method involved in embodiments of the present disclosure is performed by a terminal, and the above method includes:
step S3101, sending first information to a network device.

In some embodiments, the first information is configured to indicate the AI functionality supported by the terminal. Exemplarily, in this embodiment, the first information sent by the terminal to the network device may include functionality name information, functionality ID information, functionality sequence number information, and the like corresponding to the AI functionality supported by the terminal, and the network device may determine, according to the first information, the AI functionality supported by the terminal. The AI functionality is configured to assist wireless communication between the network device and the terminal, so as to ensure communication parameters such as quality and rate of communication signals in a wireless communication process, and ensure stability of the wireless communication.

In some embodiments, a mapping relationship is configured in both the terminal and the network device, and the mapping relationship is a correspondence relationship between the AI functionality and parameter values in a first parameter set, and different AI functionalities correspond according to values of the first parameter set. The first parameter set includes one or more configuration parameters, each configuration parameter corresponds to different value ranges, and value ranges of one or more configuration parameters jointly constitute a value range of the first parameter set.

Optional implementation manners of step S3101 may refer to optional implementation manners of step S2101 of FIG. 2, and other associated parts in the embodiments involved in FIG. 2, and details are not repeated herein.

In some embodiments, the AI functionality is associated with an AI feature, and the AI feature includes one or more AI functionalities.

In some embodiments, the method further includes:
receiving second information sent by the network device, where the second information includes a first configuration parameter, and the first configuration parameter is configured to indicate a configuration parameter in the first parameter set and a value range of the configuration parameter; and
determining, according to the first configuration parameter, a lifecycle management action of the AI functionality.

In some embodiments, the method further includes:
receiving third information sent by the network device;
activating, according to the third information, a first AI functionality matching a current configuration parameter.

In some embodiments, the step of determining, according to the first configuration parameter, the lifecycle management action of the AI functionality includes:
obtaining a mapping relationship between the AI functionality and the first parameter set;
determining, from the mapping relationship, a second AI functionality corresponding to the first configuration parameter;
determining that the first AI functionality and the second AI functionality are identical, and running the first AI functionality of the terminal; and
determining that the first AI functionality is different from the second AI functionality, and deactivating the first AI functionality of the terminal.

In some embodiments, the method further includes:
determining that the first AI functionality is different from the second AI functionality and activation signaling for the second AI functionality is not received, and processing the first configuration parameter through a non-AI processing procedure; and
determining that the first AI functionality is different from the second AI functionality and activation signaling for the second AI functionality is received, deactivating the first AI functionality, and activating the second AI functionality of the terminal.

In some embodiments, the method further includes:
determining that the second AI functionality is activated, and sending fourth information to the network device, where the fourth information is configured to indicate the network device to activate, according to the fourth information, the second AI functionality of the network device.

In some embodiments, the step in which the second AI functionality includes a plurality of second AI functionalities, and determining that the first AI functionality and the second AI functionality are identical, and running the first AI functionality of the terminal includes:
determining that the first AI functionality is any one AI functionality among the plurality of second AI functionalities; and
running the first AI functionality of the terminal.

In some embodiments, the method further includes:
determining that the mapping relationship does not include any AI functionality matching the first configuration parameter; and
processing the first configuration parameter through a non-AI processing procedure.

In some embodiments, the step of obtaining the mapping relationship between the AI functionality and the first parameter set includes:
obtaining a configuration protocol; and
determining the mapping relationship according to the configuration protocol.

Through the above manner, the first information is sent to the network device, the first information is configured to indicate the AI functionality supported by the terminal, the AI functionality has a mapping relationship with the parameter value in a first parameter set, the first parameter set at least includes one or more configuration parameters, and value ranges of at least one configuration parameter in the first parameter set corresponding to different AI functionalities in the AI feature partially overlap. Thus, the mapping relationship between the AI functionality and the parameter set value is configured, a corresponding AI functionality is determined by configuring parameter sets with different values, so as to achieve the lifecycle management of the AI functionality based on the parameter set.

FIG. 4 is a flow schematic diagram of a communication method shown according to embodiments of the present disclosure. As shown in FIG. 4, the communication method involved in embodiments of the present disclosure is performed by a network device, and the above method includes:
step S4101, receiving first information sent by a terminal.

In some embodiments, the first information is configured to indicate an AI functionality supported by the terminal. Exemplarily, a plurality of models are configured in the network device, different models correspond to different AI functionalities, and the network device may determine, according to the first information reported by the terminal, the AI functionality supported by the terminal, and perform lifecycle management on the AI functionality in the terminal based on the AI functionality supported by the terminal, where the lifecycle management action may include activation, deactivation, switching, and the like of the AI functionality in the terminal.

In some embodiments, a mapping relationship is configured in both the terminal and the network device, and the mapping relationship is a correspondence relationship between the AI functionality and parameter values in a first parameter set, and different AI functionalities correspond according to values of the first parameter set. The effect of the mapping relationship is the same as that in the above embodiments, reference may be made to the above embodiments, and details are not repeated herein.

Optional implementation manners of step S4101 may refer to optional implementation manners of step S2102 of FIG. 2, and other associated parts in the embodiments involved in FIG. 2, and details are not repeated herein.

In some embodiments, the AI functionality is associated with an AI feature, and the AI feature includes one or more AI functionalities.

In some embodiments, the method further includes:
generating second information according to the AI functionality, where the second information includes a first configuration parameter, the first configuration parameter is configured to configure a parameter value in the first parameter set, and the first configuration parameter is configured to indicate the terminal to determine, according to the first configuration parameter, a lifecycle management action of the AI functionality; and
sending the second information to the terminal.

In some embodiments, the step of generating second information according to the AI functionality includes:
obtaining a mapping relationship between the AI functionality and the first parameter set;
determining the first configuration parameter according to the mapping relationship; and
generating the second information according to the first configuration parameter and sending the second information to the terminal.

In some embodiments, the step of obtaining the mapping relationship between the AI functionality and the first parameter set includes:
obtaining a configuration protocol; and
determining the mapping relationship according to the configuration protocol.

In some embodiments, the method further includes:
sending third information to the terminal, where the third information is configured to indicate the terminal to activate, according to the third information, a first AI functionality matching a current configuration parameter.

In some embodiments, the method further includes:
sending activation signaling to the terminal, where the activation signaling is configured to indicate the terminal to activate a second AI functionality, and the second AI functionality corresponds to the first configuration parameter.

In some embodiments, the method further includes:
receiving fourth information sent by the terminal; and
determining, according to the fourth information, that the second AI functionality of the terminal is activated, and activating the second AI functionality of the network device.

In the above embodiments, the first information sent by the terminal is received, the first information is configured to indicate an AI functionality supported by the terminal, the AI functionality has a mapping relationship with a parameter value in a first parameter set, the first parameter set at least includes one or more configuration parameters, and value ranges of at least one configuration parameter in the first parameter set corresponding to different AI functionalities in an AI feature partially overlap. Thus, a mapping relationship between a value of a parameter set and the AI functionality is configured in the network device, different AI functionalities may be corresponded to according to configuration parameters with different values, a relationship between the configuration parameter and the AI functionality is clarified, and the problem that ambiguous parameter configuration causes lifecycle management disorder of the AI functionality is avoided.

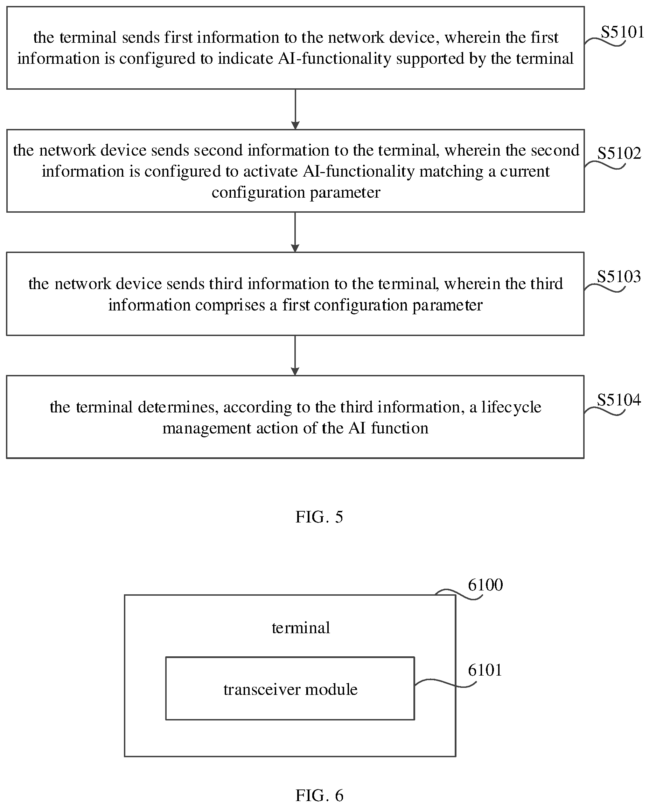

FIG. 5 is a flowchart of a communication method shown according to embodiments of the present disclosure. As shown in FIG. 5, embodiments of the present disclosure relate to a communication method, performed by a terminal and a network device, and the above method includes:
step S5101, the terminal sends first information to the network device, where the first information is configured to indicate AI-functionality supported by the terminal.

In some embodiments, a mapping relationship is configured in both the terminal and the network device, and the mapping relationship is a correspondence relationship between an AI functionality and parameter values in a first parameter set, the first parameter set includes one or more configuration parameters, values of the one or more configuration parameters jointly constitute a value range of the first parameter set, and value ranges of at least one configuration parameter in the first parameter set corresponding to different AI functionalities partially overlap. The mapping relationship in this embodiment is the same as that in the above embodiments, reference may be made to the above embodiments, and details are not repeated herein.

In some embodiments, the terminal may also report, based on the mapping table in the above embodiments, a value range of a configuration parameter corresponding to the supported AI-functionality, and the network device determines, based on the value range with reference to the above mapping table, the AI-functionality supported by the terminal.

In some embodiments, one or more AI features are configured in the terminal and the network device, one or more AI-functionalities are included under each AI feature, a corresponding AI-functionality may be determined by value ranges of one or more configuration parameters based on the above mapping relationship, and parameter value ranges corresponding to different AI-functionalities under a same AI feature may partially overlap.

Step S5102, the network device sends second information to the terminal, where the second information is configured to activate AI-functionality matching a current configuration parameter.

Exemplarily, in this embodiment, the definition of the second information is the same as the effect of the third information in the above embodiments, reference may be made to the definition of the above third information, and details are not repeated herein.

Step S5103, the network device sends third information to the terminal, where the third information includes a first configuration parameter.

Exemplarily, in this embodiment, the first configuration parameter is associated with an AI functionality supported by the terminal, and the network device indicates a lifecycle management action in the terminal according to the first configuration parameter.

Step S5104, the terminal determines, according to the third information, a lifecycle management action of the AI functionality.

Exemplarily, the lifecycle management action includes activation, deactivation, AI functionality switching, and the like of the AI functionality in the terminal.

In some embodiments, after the terminal activates an AI feature corresponding to the AI functionality, when it is determined that the terminal supports the AI functionality associated with the first configuration parameter, and the first configuration parameter corresponds to only one AI functionality, the AI functionality in the terminal is activated, and after the AI functionality is activated, feedback information is sent to the network device, such that the network device activates the AI functionality in the network device based on the feedback information.

In some embodiments, when it is determined that the AI functionality corresponding to the first configuration parameter is different from the AI functionality currently running in the terminal, the AI functionality currently running in the terminal is deactivated.

In some embodiments, when it is determined, based on the above mapping relationship, that the AI functionality corresponding to the first configuration parameter includes a plurality of AI functionalities, the plurality of AI functionalities are compared with the currently running AI functionality, and if the currently running AI functionality is any one of the plurality of AI functionalities, the currently used AI functionality continues to run.

In some embodiments, when it is determined, based on the above mapping relationship, that the AI functionality corresponding to the first configuration parameter includes a plurality of AI functionalities, and the plurality of AI functionalities are all different from the currently running AI functionality, fourth information sent by the network device is received, where the fourth information is configured to indicate the terminal to activate a certain AI functionality among the plurality of AI functionalities. If the fourth information sent by the network device is not received within a preset time, the terminal falls back to a preset non-AI processing manner to process the first configuration parameter.

In some embodiments, when the mapping relationship does not include any AI functionality matching the first configuration parameter, the terminal falls back to a non-AI processing manner to process the first configuration parameter.

In some embodiments, taking the above AI-based CSI compression as an example, after the AI-based CSI compression in the terminal is activated, the first configuration parameter configured by the network device for the terminal: a frequency-domain configuration parameter CSI-RS frequency is 32 RBs, and an antenna configuration parameter CSI-RS port is 16 ports, and it is determined, based on the above mapping table, that the first configuration parameter uniquely corresponds to AI-functionality-1, and then AI-functionality-1 in the terminal is activated.

After the AI-based CSI compression in the terminal is activated, the AI-functionality currently running in the terminal is AI-functionality-1, and, a first configuration parameter sent by the network device to the terminal is received: a frequency-domain configuration parameter CSI-RS frequency is 48 RBs, and an antenna configuration parameter CSI-RS port is 128 ports, and it is determined, based on the above mapping table, that the first configuration parameter corresponds to AI-functionality-2 and AI-functionality-4. Thus, the network device needs to reconfigure activation signaling, so as to indicate the terminal to activate AI-functionality-2 or AI-functionality-4.

After the AI-based CSI compression in the terminal is activated, the AI-functionality currently running in the terminal is AI-functionality-1, and, a first configuration parameter sent by the network device to the terminal is received: a frequency-domain configuration parameter CSI-RS frequency is 48 RBs, and an antenna configuration parameter CSI-RS port is 64 ports, and it is determined, based on the above mapping table, that the first configuration parameter corresponds to AI-functionality-1, and then the terminal continues to run AI-functionality-1.

Through the above manner, a mapping relationship between a parameter set and an AI functionality is configured in the terminal and the network device. After the terminal reports the supported AI functionality, the network device may send a parameter set to the terminal based on the mapping relationship, so as to perform lifecycle management on the AI functionality in the terminal. The problem that the lifecycle management of the AI functionality is disordered due to an unclear correspondence relationship between the parameter set and the AI functionality is avoided.

Embodiments of the present disclosure further propose an apparatus for implementing any one of the above methods, for example, an apparatus is proposed, where the above apparatus includes units or modules configured to implement steps performed by the terminal in any one of the above methods. For another example, another apparatus is further proposed, including units or modules configured to implement steps performed by the network device (for example, an access network device, a core network functionality node, a core network device, and the like) in any one of the above methods.

It should be understood that division of respective units or modules in the above apparatus is merely division of a logical functionality, and in actual implementation, all or part of the units or modules may be integrated onto one physical entity, or may be physically separated. In addition, the units or modules in the apparatus may be implemented in a form of a processor invoking software: for example, the apparatus includes a processor, the processor is connected to a memory, instructions are stored in the memory, and the processor invokes the instructions stored in the memory, so as to implement any one of the above methods or implement functionalities of respective units or modules of the above apparatus, where the processor is, for example, a general-purpose processor, such as a Central Processing Unit (CPU) or a microprocessor, and the memory is a memory inside the apparatus or a memory outside the apparatus. Alternatively, the units or modules in the apparatus may be implemented in a form of a hardware circuit, and functionalities of part or all of the units or modules may be implemented through design of the hardware circuit, where the above hardware circuit may be understood as one or more processors; for example, in one implementation, the above hardware circuit is an application-specific integrated circuit (ASIC), and functionalities of part or all of the above units or modules are implemented through design of logical relationships of elements in the circuit; for another example, in another implementation, the above hardware circuit may be implemented by a programmable logic device (PLD), taking a Field Programmable Gate Array (FPGA) as an example, which may include a large quantity of logic gate circuits, and connection relationships between the logic gate circuits are configured through a configuration file, thereby implementing functionalities of part or all of the above units or modules. All units or modules of the above apparatus may be implemented entirely in the form of a processor invoking software, or implemented entirely in the form of a hardware circuit, or implemented partially in the form of a processor invoking software and the remaining part in the form of a hardware circuit.

In embodiments of the present disclosure, the processor is a circuit having signal processing capability. In one implementation, the processor may be a circuit having instruction reading and running capability, such as a Central Processing Unit (CPU), a microprocessor, a graphics processing unit (GPU) (which may be understood as a microprocessor), or a digital signal processor (DSP), and the like; in another implementation, the processor may implement certain functionalities through logical relationships of a hardware circuit, where the logical relationships of the above hardware circuit are fixed or may be reconfigured, for example, the processor is a hardware circuit implemented by an application-specific integrated circuit (ASIC) or a programmable logic device (PLD), such as an FPGA. In a reconfigurable hardware circuit, a process in which the processor loads a configuration document and implements hardware circuit configuration may be understood as a process in which the processor loads instructions to implement functionalities of part or all of the above units or modules. In addition, the processor may also be a hardware circuit designed for artificial intelligence, which may be understood as an ASIC, such as a Neural Network Processing Unit (NPU), a Tensor Processing Unit (TPU), a Deep learning Processing Unit (DPU), and the like.

FIG. 6 is a structural schematic diagram of a terminal 6100 proposed by embodiments of the present disclosure. As shown in FIG. 6, the terminal 6100 may include: a transceiver module 6101. In some embodiments, the transceiver module 6101 is configured to send first information to a network device, where the first information is configured to indicate an AI functionality supported by the terminal, the AI functionality is associated with a parameter value in a first parameter set, the first parameter set includes one or more configuration parameters, and value ranges of at least one configuration parameter in the first parameter set corresponding to different AI functionalities partially overlap. Optionally, the above transceiver module is configured to perform at least one of communication steps such as sending and/or receiving performed by the terminal 101 in any one of the above methods, and details are not repeated herein.

In some embodiments, the transceiver module may include a sending module and/or a receiving module, and the sending module and the receiving module may be separated, or may be integrated together. Optionally, the transceiver module may be mutually replaced with a transceiver.

In some embodiments, the transceiver module may be one module, and may also include a plurality of submodules. Optionally, the above plurality of submodules respectively perform all or part of steps required to be performed by the processing module.

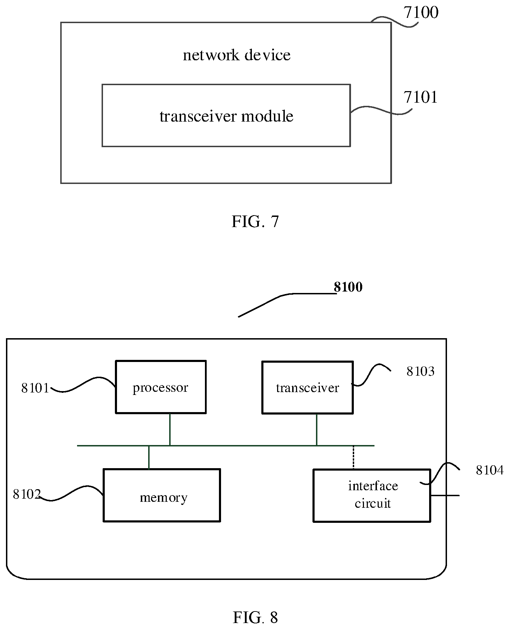

FIG. 7 is a structural schematic diagram of a network device 7100 proposed by embodiments of the present disclosure. The network device 7100 may be an access network device, a core network device, and the like, may also be a terminal (for example, user equipment and the like), may also be a chip, a chip system, a processor, and the like that support the network device to implement any one of the above methods, and may also be a chip, a chip system, a processor, and the like that support the terminal to implement any one of the above methods. The network device 7100 may include: a transceiver module 7101, configured to receive first information sent by a terminal, where the first information is configured to indicate an AI functionality supported by the terminal, the AI functionality is associated with a parameter value in a first parameter set, the first parameter set includes one or more configuration parameters, and value ranges of at least one configuration parameter in the first parameter set corresponding to different AI functionalities partially overlap. Optionally, the above transceiver module 7101 is configured to perform at least one of communication steps such as sending and/or receiving performed by the network device 102 in any one of the above methods, and details are not repeated herein.

In some embodiments, the transceiver module may include a sending module and/or a receiving module, and the sending module and the receiving module may be separated, or may be integrated together. Optionally, the transceiver module may be mutually replaced with a transceiver.

FIG. 8 is a structural schematic diagram of a communication device 8100 proposed by embodiments of the present disclosure. The communication device 8100 may be a network device (for example, an access network device, a core network device, and the like), may also be a terminal (for example, user equipment and the like), may also be a chip, a chip system, a processor, and the like that support the network device to implement any one of the above methods, and may also be a chip, a chip system, a processor, and the like that support the terminal to implement any one of the above methods. The communication device 8100 may be used to implement the methods described in the above method embodiments, and specifically, reference may be made to descriptions in the above method embodiments.

As shown in FIG. 8, the communication device 8100 includes one or more processors 8101. The processor 8101 may be a general-purpose processor or a dedicated processor, and the like, for example, may be a baseband processor or a central processor. The baseband processor may be used to process a communication protocol and communication data, and the central processor may be used to control a communication apparatus (such as a base station, a baseband chip, a terminal device, a terminal device chip, a DU or a CU, and the like), execute a program, and process data of the program. Optionally, the communication device 8100 is configured to perform any one of the above methods. Optionally, the one or more processors 8101 are configured to invoke instructions to cause the communication device 8100 to perform any one of the above methods.

In some embodiments, the communication device 8100 further includes one or more transceivers 8102. When the communication device 8100 includes one or more transceivers 8102, the transceiver 8102 performs at least one of communication steps such as sending and/or receiving in the above method, and the processor 8101 performs at least one of other steps. In optional embodiments, the transceiver may include a receiver and/or a transmitter, and the receiver and the transmitter may be separated, or may be integrated together. Optionally, terms such as transceiver, transceiver unit, transceiver machine, transceiver circuit, interface circuit, interface, and the like may be mutually replaced, terms such as transmitter, transmitting unit, transmitter machine, transmitting circuit, and the like may be mutually replaced, and terms such as receiver, receiving unit, receiver machine, receiving circuit, and the like may be mutually replaced.

In some embodiments, the communication device 8100 further includes one or more memories 8103 for storing data. Optionally, all or part of the memories 8103 may also be outside the communication device 8100. In optional embodiments, the communication device 8100 may include one or more interface circuits 8104. Optionally, the interface circuit 8104 is connected to the memory 8102, and the interface circuit 8104 may be used to receive data from the memory 8102 or another apparatus, and may be used to send data to the memory 8102 or another apparatus. For example, the interface circuit 8104 may read data stored in the memory 8102, and send the data to the processor 8101.

The communication device 8100 in the description of the above embodiments may be a network device or a terminal, but the scope of the communication device 8100 described in the present disclosure is not limited thereto, and a structure of the communication device 8100 may not be limited by FIG. 8A. The communication device may be an independent device or may be a part of a larger device. For example, the communication device may be: 1) an independent integrated circuit IC, or a chip, or a chip system or subsystem; (2) a set having one or more ICs, optionally, the above IC set may also include a storage component for storing data and programs; (3) an ASIC, for example, a modem; (4) a module that may be embedded in another device; (5) a receiver, a terminal device, an intelligent terminal device, a cellular phone, a wireless device, a handset, a mobile unit, a vehicle-mounted device, a network device, a cloud device, an artificial intelligence device, and the like; (6) others, and the like.

The respective modules and/or devices described in various embodiments such as a virtual apparatus, a physical apparatus, a chip, and the like may be arbitrarily combined or separated according to circumstances. Optionally, some or all steps may also be performed by cooperation of a plurality of modules and/or devices, which is not limited herein.

The present disclosure further proposes a storage medium, instructions are stored on the above storage medium, and when the above instructions run on the communication device 8100, the communication device 8100 is caused to perform any one of the above methods. Optionally, the above storage medium is an electronic storage medium. Optionally, the above storage medium is a computer-readable storage medium, but is not limited thereto, and it may also be a storage medium readable by another apparatus. Optionally, the above storage medium may be a non-transitory storage medium, but is not limited thereto, and it may also be a transitory storage medium.

The present disclosure further proposes a program product, and when the above program product is executed by the communication device 8100, the communication device 8100 is caused to perform any one of the above methods. Optionally, the above program product is a computer program product.

The present disclosure further proposes a computer program, and when the computer program runs on a computer, the computer is caused to perform any one of the above methods.

## Claims

1. A communication method, performed by a terminal, comprising:
sending first information to a network device, wherein the first information is configured to indicate an AI functionality supported by the terminal, the AI functionality is associated with a parameter value in a first parameter set, the first parameter set comprises one or more configuration parameters, and value ranges of at least one configuration parameter in the first parameter set corresponding to different AI functionalities partially overlap.

2. The method according to claim 1, wherein the AI functionality is associated with an AI feature, and the AI feature comprises one or more AI functionalities.

3. The method according to claim 1 or 2, further comprising:
receiving second information sent by the network device, wherein the second information comprises a first configuration parameter, and the first configuration parameter indicates a configuration parameter in the first parameter set and a value range of the configuration parameter; and
determining, according to the first configuration parameter, a lifecycle management action of the AI functionality.

4. The method according to claim 3, further comprising:
receiving third information sent by the network device; and
activating, according to the third information, a first AI functionality matching a current configuration parameter.

5. The method according to claim 4, wherein the determining, according to the first configuration parameter, the lifecycle management action of the AI functionality comprises:
obtaining a mapping relationship between the AI functionality and the first parameter set;
determining, from the mapping relationship, a second AI functionality corresponding to the first configuration parameter;
determining that the first AI functionality and the second AI functionality are identical, and running the first AI functionality of the terminal; and
determining that the first AI functionality is different from the second AI functionality, and deactivating the first AI functionality of the terminal.

6. The method according to claim 4, further comprising:
determining that the first AI functionality is different from the second AI functionality and activation signaling for the second AI functionality is not received, and processing the first configuration parameter through a non-AI processing procedure; and
determining that the first AI functionality is different from the second AI functionality and the activation signaling for the second AI functionality is received, deactivating the first AI functionality, and activating the second AI functionality of the terminal.

7. The method according to claim 6, further comprising:
determining that the second AI functionality is activated, and sending fourth information to the network device, wherein the fourth information is configured to indicate the network device to activate the second AI functionality of the network device.

8. The method according to claim 5, wherein the second AI functionality comprises a plurality of AI functionalities, and the determining that the first AI functionality and the second AI functionality are identical, and running the first AI functionality of the terminal comprises:
determining that the first AI functionality is any one AI functionality among the plurality of AI functionalities; and
running the first AI functionality of the terminal.

9. The method according to claim 5, further comprising:
determining that the mapping relationship does not comprise any AI functionality matching the first configuration parameter; and
processing the first configuration parameter through a non-AI processing procedure.

10. The method according to any one of claims 3 to 9, wherein the obtaining the mapping relationship between the AI functionality and the first parameter set comprises:
obtaining a configuration protocol; and
determining, according to the configuration protocol, the mapping relationship.

11. A communication method, performed by a network device, comprising:
receiving first information sent by a terminal, wherein the first information is configured to indicate an AI functionality supported by the terminal, the AI functionality is associated with a parameter value in a first parameter set, the first parameter set comprises one or more configuration parameters, and value ranges of at least one configuration parameter in the first parameter set corresponding to different AI functionalities partially overlap.

12. The method according to claim 11, wherein the AI functionality is associated with an AI feature, and the AI feature comprises one or more AI functionalities.

13. The method according to claim 11, further comprising:
generating second information according to the AI functionality, wherein the second information comprises a first configuration parameter, the first configuration parameter is configured to indicate a configuration parameter in the first parameter set and a value range of the configuration parameter, and the first configuration parameter is further configured to indicate the terminal to determine, according to the first configuration parameter, a lifecycle management action of the AI functionality; and
sending the second information to the terminal.

14. The method according to claim 13, wherein the generating the second information according to the AI functionality comprises:
obtaining a mapping relationship between the AI functionality and the first parameter set;
determining, according to the mapping relationship, the first configuration parameter; and
generating, according to the first configuration parameter, the second information, and sending the second information to the terminal.

15. The method according to claim 14, wherein the obtaining the mapping relationship between the AI functionality and the first parameter set comprises:
obtaining a configuration protocol; and
determining, according to the configuration protocol, the mapping relationship.

16. The method according to any one of claims 13 to 15, further comprising:
sending third information to the terminal, wherein the third information is configured to indicate the terminal to activate, according to the third information, a first AI functionality matching a current configuration parameter.

17. The method according to claim 16, further comprising:
sending activation signaling to the terminal, wherein the activation signaling is configured to indicate the terminal to activate a second AI functionality, and the second AI functionality corresponds to the first configuration parameter.

18. The method according to claim 17, further comprising:
receiving fourth information sent by the terminal; and
determining, according to the fourth information, that the second AI functionality of the terminal is activated, and activating the second AI functionality of the network device.

19. A terminal, wherein the terminal comprises: a transceiver module, configured to send first information to a network device, wherein the first information is configured to indicate an AI functionality supported by the terminal, the AI functionality is associated with a parameter value in a first parameter set, the first parameter set comprises one or more configuration parameters, and value ranges of at least one configuration parameter in the first parameter set corresponding to different AI functionalities partially overlap.

20. A network device, comprising:
a transceiver module, configured to receive first information sent by a terminal, wherein the first information is configured to indicate an AI functionality supported by the terminal, the AI functionality is associated with a parameter value in a first parameter set, the first parameter set at least comprises one or more configuration parameters, and value ranges of at least one configuration parameter in the first parameter set corresponding to different AI functionalities partially overlap.

21. A terminal, comprising:
one or more processors;
a memory coupled to the one or more processors, wherein the memory comprises executable instructions, and when the executable instructions are executed by the one or more processors, the terminal is caused to perform the communication method according to any one of claims 1 to 10.

22. A network device, comprising:
one or more processors;
a memory coupled to the one or more processors, wherein the memory comprises executable instructions, and when the executable instructions are executed by the one or more processors, the first device is caused to perform the communication method according to any one of claims 11 to 18.

23. A communication system, comprising a terminal and a network device, wherein the terminal is configured to implement the communication method according to any one of claims 1 to 10, and the network device is configured to implement the communication method according to any one of claims 11 to 18.

24. A storage medium, wherein the storage medium stores instructions, wherein when the instructions run on a communication device, the communication device is caused to perform the communication method according to any one of claims 1 to 10 or claims 11 to 18.
